(19) Europäisches Patentamt
European Patent Office
Office européen des brevets

(11) **EP 4 318 934 A1**

(12) **EUROPEAN PATENT APPLICATION**
published in accordance with Art. 153(4) EPC

(43) Date of publication:
**07.02.2024 Bulletin 2024/06**

(21) Application number: **21934436.3**

(22) Date of filing: **22.09.2021**

(51) International Patent Classification (IPC):
***H02P 21/14*** *(2016.01)*

(52) Cooperative Patent Classification (CPC):
Y02E 10/72

(86) International application number:
**PCT/CN2021/119535**

(87) International publication number:
**WO 2022/205799 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021  CN 202110349970**

(71) Applicant: **GOLDWIND SCIENCE & TECHNOLOGY
CO., LTD.
Xinjiang 830026 (CN)**

(72) Inventors:
• **WANG, Jinpeng**
  **Beijing 100176 (CN)**
• **GUO, Rui**
  **Beijing 100176 (CN)**
• **LV, Liangnian**
  **Beijing 100176 (CN)**

(74) Representative: **Gulde & Partner
Patent- und Rechtsanwaltskanzlei mbB
Wallstraße 58/59
10179 Berlin (DE)**

(54) **PARAMETER IDENTIFICATION METHOD AND PARAMETER IDENTIFICATION DEVICE FOR WIND TURBINE**

(57) The present disclosure provides a parameter identification method and parameter identification device for a wind turbine. The parameter identification method comprises: controlling a wind turbine to perform no-load startup and controlling the wind turbine to operate stably; acquiring operation data of the wind turbine; determining at least one parameter of the wind turbine on the basis of the acquired operation data of the wind turbine; and on the basis of the at least one determined parameter, determining other parameters of the wind turbine by means of a predetermined parameter configuration table.

Figure 2

## Description

## TECHNICAL FIELD

The present disclosure generally relates to the technical field of wind power generation, and more particularly, to a parameter identification method and apparatus for a wind turbine.

## BACKGROUND

At present, it is common to control a generator by manually configuring generator parameters in the wind power industry. Alternatively, an online parameter identification system is used to obtain the generator parameters.

However, manually configuring generator parameters can introduce human error factors, which impacts the safe operation of the wind turbine if it is configured incorrectly. Moreover, when there are multiple models of the wind turbines, the manual configuration of generator parameters is inefficient. In addition, it is complicated to perform online parameter identification by identifying the generator parameters online, and the accuracy of online parameter identification cannot meet the control requirements under certain transient conditions.

## SUMMARY

This disclosure provides a parameter identification method and apparatus for a wind turbine, which can eliminate manual configuration for generator parameters, simplify the process of identifying the generator parameters and improve the operational reliability of the wind turbine and the maintenance efficiency of the control software of the wind turbine.

In an aspect, a parameter identification method for a wind turbine is provided. The method includes: controlling the wind turbine to no-load start and operate stably; acquiring operating data of the wind turbine; determining at least one parameter of the wind turbine based on the acquired operating data of the wind turbine; determining other parameters of the wind turbine through a predetermined parameter configuration table based on the at least one determined parameter.

In another aspect, a parameter identification apparatus for a wind turbine is provided. The parameter identification apparatus for a wind turbine includes: a processor; and a memory, storing a computer program; where the computer program, when executed by the processor, implements the parameter identification method for the wind turbine as described above.

In another aspect, a computer readable storage medium is provided, which stores a computer program thereon. The computer program, when executed by a processor, implements the parameter identification method for the wind turbine as described above.

With the parameter identification method and apparatus for the wind turbine provided according to the embodiments of the present disclosure, generator parameters can be identified fast, which can eliminate the process of manually configuring generator parameters and save manual labor consumption. In addition, according to the embodiments of the present disclosure, the parameter identification method and apparatus for the wind turbine can improve the maintenance efficiency of the control software of the wind turbine, eliminate the risk of reducing the operational reliability of the wind turbine due to incorrect configuration of the generator parameters by human factors, without increasing the hardware cost of the wind turbine, which facilitates application.

Other aspects and/or advantages of the general concept of the present disclosure are partially set forth in the following description. Some other aspects and/or advantages are clarified from the description or can be understood from the practice of the general concept of the present disclosure.

## BRIEF DESCRIPTION OF THE DRAWINGS

The above and other objectives and features of embodiments of the present disclosure will be more clarified from the following description of embodiments in connection with the accompanying drawings. In the drawings:

Figure 1 shows a parameter identification principle architecture diagram of a wind turbine according to an embodiment of the present disclosure;

Figure 2 shows a flowchart of a parameter identification method for a wind turbine according to an embodiment of the present disclosure;

Figure 3 shows a flowchart of a method for determining flux linkage of a wind turbine based on three-phase output voltages of a wind turbine according to an embodiment of the present disclosure;

Figure 4 shows a flowchart of a method for determining flux linkage of a wind turbine based on three-phase output voltages of a wind turbine according to another embodiment of the present disclosure;

Figure 5 shows a block diagram of a parameter identification apparatus for a wind turbine according to an embodiment of the present disclosure;

Figure 6 shows a block diagram of a controller for a wind turbine according to an embodiment of the present disclosure; and

Figure 7 shows an embodiment of identifying generation parameters according to an embodiment of the present disclosure.

## DETAILED DESCRIPTION OF THE EMBODIMENTS

In order to thoroughly understand the embodiments of the present disclosure as defined by the claims and equivalents thereof, the description is provided with reference to the accompanying drawings hereinafter. Various specific details are included to facilitate the understanding, which are only illustrative. Accordingly, those of ordinary skilled in the art can recognize that various changes and modifications may be made to the embodiments described herein without departing from the scope and spirit of the present disclosure. In addition, the description of common functions and constructions is omitted for clarity and conciseness.

Hereinafter, the principle of a parameter identification method for a wind turbine according to an embodiment of the present disclosure is explained first.

In practical engineering applications, at least one parameter (e.g., the pole-pair number and/or flux linkage) is significantly different for different models of wind turbines and may be determined through appropriate methods (e.g., the used method in the parameter identification method for a wind turbine according to the embodiments of the present disclosure). On the other hand, since the precise acquisition of other parameters of the wind turbine (e.g., an inductance, a resistance and the like of the wind turbine) is subjected to the accuracy of the voltage and current acquisition devices and different control algorithms, the identification process is complex and the accuracy is difficult to guarantee. Therefore, a parameter configuration table can be established in advance with the pole-pair number and/or the flux linkage of the generator as input variables. By looking up the table, the resistance and inductance values of the generator corresponding to the input variables can be found, which can simplify the generator parameter identification method and rapidly identify the generator parameters. In this case, the pole-pair number, the flux linkage, the resistance, and the inductance (e.g., a d-axis inductance and a q-axis inductance) of the wind turbine may be acquired by using various existing testing methods during the manufacturing and production process of the wind turbine or during the use of the wind turbine. In addition, a parameter configuration table that reflects a correspondence relationship between the pole-pair number and the flux linkage of the wind turbine with the resistance, the d-axis inductance and the q-axis inductance of the wind turbine may be established by using various existing methods. Alternatively, a parameter configuration table that reflects a correspondence relationship between the pole-pair number of the wind turbine with the flux linkage, the resistance, the d-axis inductance and the q-axis inductance of the wind turbine may be established by using various existing methods. Or a parameter configuration table that reflects a correspondence relationship between the flux linkage of the wind turbine with the pole-pair number, the resistance, the d-axis inductance and the q-axis inductance of the wind turbine may be established by using various existing methods. Therefore, the process for acquiring the pole-pair number, the flux linkage, the resistance, the d-axis inductance and the q-axis inductance of the wind turbine, and the process of establishing a mapping relationship there between are not described herein.

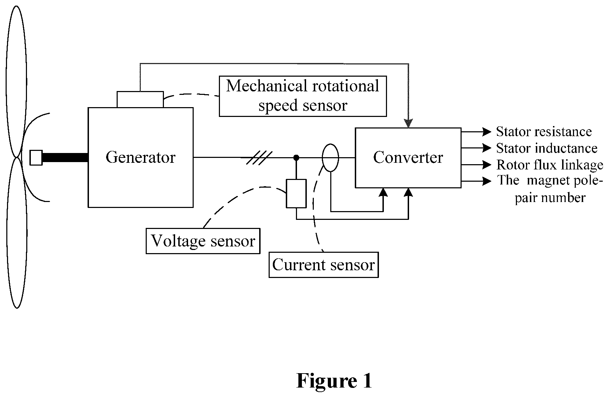

According to embodiments of the present disclosure, the parameter identification method and apparatus for a wind turbine are described below in detail with reference to Figures 1 to 6.

Figure 1 is a parameter identification principle architecture diagram of a wind turbine according to an embodiment of the present disclosure.

As shown in Figure 1, according to the present disclosure, during the operation of a wind turbine, by using the parameter identification method for the wind turbine according to the present disclosure, based on a mechanical rotational speed fed back from a mechanical rotational speed sensor of the generator, a generator voltage fed back from a voltage sensor, and a generator current fed back from a current sensor, a stator resistance, a stator inductance, a rotor flux linkage and the magnet pole-pair number of a generator are rapidly and effectively identified.

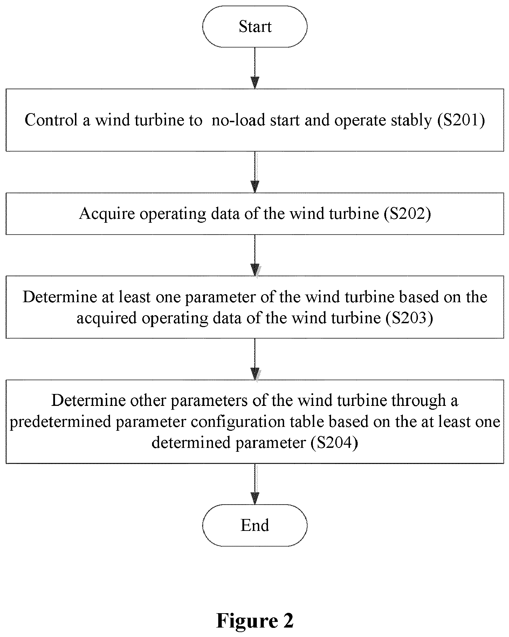

Figure 2 illustrates a flowchart of a parameter identification method for a wind turbine according to an embodiment of the present disclosure. In the present disclosure, the parameter identification method for a wind turbine may be run in a main controller of the wind turbine or in a dedicated controller of the wind turbine.

Referring to Figure 2, in step S201, a wind turbine is controlled to no-load start and operate stably.

According to the embodiment of the present disclosure, the wind turbine may be controlled to no-load start and operate stably by adjusting a blade angle by a pitch system. In an embodiment, "adjusting a blade angle" may be achieved in the following methods. For example, a corresponding pitch mechanism may be controlled through automatic control software to drive blades of the wind turbine to rotate. In addition, "no-load" indicates that the voltage output terminal of the wind turbine is not connected to the load, i.e., the external output power is zero.

In an embodiment, before the wind turbine is controlled to no-load start, a turbine-side circuit breaker of a converter of the wind turbine may be closed to connect the converter to the wind turbine. In this case, setting the turbine-side circuit breaker can provide safety protection for the operator. In a case of wind turbine shutdown, when the operator is about to identify parameters of the wind turbine, it can be clear that the converter is connected to the wind turbine and powered on by closing the turbine-side circuit breaker, to eliminate the risk of electric shock. According to the embodiment of the present disclosure, closing the turbine-side circuit breaker may be manually completed by the operator, which is not limited in the present disclosure. For instance, the turbine-side circuit breaker may be closed through various automatic control software. Therefore, there is no limitation on the method of closing the turbine-side circuit breaker in the present disclosure.

Next, in step S202, operating data of the wind turbine is acquired. Furthermore, step S202 is performed in a stable operating state of the wind turbine to acquire the operating data of the wind turbine. In an embodiment, the operating data of the wind turbine includes but is not limited to three-phase output voltages of the wind turbine and a rotational speed of the wind turbine. According to the embodiment of the present disclosure, the three-phase output voltages of the wind turbine may be collected in real-time by using various detection devices. Further, the rotational speed of the wind turbine may be detected through detection devices, or the rotational speed of the wind turbine may also be detected by using a physical rotational speed detection method.

In step S203, at least one parameter of the wind turbine may be determined based on the acquired operating data of the wind turbine. In an embodiment, the pole-pair number of the wind turbine and/or flux linkage of the wind turbine may be determined based on the three-phase output voltages and the rotational speed of the wind turbine.

According to the embodiment of the present disclosure, the method for determining the pole-pair number of the wind turbine based on the three-phase output voltages and the rotational speed of the wind turbine may include the following steps. Firstly, a frequency of the wind turbine may be determined based on the three-phase output voltages of the wind turbine. Then, the pole-pair number of the wind turbine may be determined based on the rotational speed of the wind turbine and the calculated frequency of the wind turbine.

In an embodiment, a voltage of the wind turbine in a two-phase rotating coordinate system may be determined based on the three-phase output voltages of the wind turbine. Then, the voltage in the two-phase rotating coordinate system may be inputted into a phase-locked loop to obtain the frequency of the wind turbine. For example, the three-phase output voltages of the wind turbine may be subjected to Clark-Park Transformation to obtain the voltage in the rotating coordinate system, i.e., a d-axis voltage $U_d$ and a q-axis voltage $U_q$. The voltage in the rotating coordinate system, e.g., the d-axis voltage $U_d$ or the q-axis voltage $U_q$, may then be input to the phase-locked loop to acquire an output of the phase-locked loop as the frequency $f$ of the wind turbine. Optionally, the method for acquiring the frequency of the wind turbine is not limited thereto. For example, the frequency $f$ of the wind turbine may be determined by performing zero-crossing detection on an output voltage of at least one phase in the three-phase output voltages of the wind turbine (e.g., an a-phase output voltage $U_a$, a b-phase output voltage $U_b$, or a c-phase output voltage $U_c$) within a predetermined time period.

After acquiring the frequency $f$ of the wind turbine, the pole-pair number $P_n$ of the wind turbine may be determined by using the following equation (1).

$$P_n = \frac{60f}{n_0} \quad (1)$$

Wherein, $n_0$ represents the rotational speed of the wind turbine.

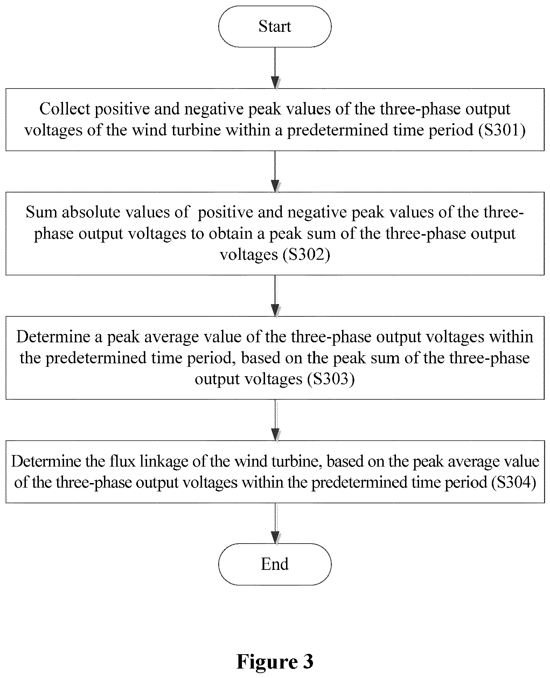

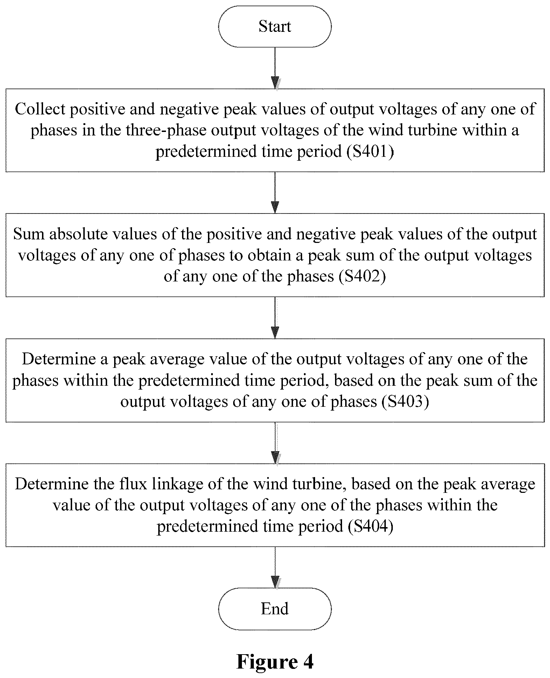

The method for determining the flux linkage of a wind turbine is described below with reference to Figures 3 and 4.

Figure 3 illustrates a flowchart of a method for determining flux linkage of a wind turbine based on three-phase output voltages of a wind turbine according to an embodiment of the present disclosure.

Referring to Figure 3, in step S301, within a predetermined time period $T_1$, positive and negative peak values of three-phase output voltages of a wind turbine may be collected. In an embodiment, the duration of the predetermined time period $T_1$ may be determined by using the following equation (2).

$$T_1 = \frac{n}{f} \quad (2)$$

Wherein, $f$ represents a frequency of a wind turbine, and $n$ is a preset value. $n$ may be an integer greater than 10, but not limited thereto. In other words, the duration of the predetermined time period $T_1$ may be arbitrarily set by those skilled in the art as required, as long as sufficient positive and negative peak values of the three-phase output voltages can be ensured to be collected within the predetermined time period $T_1$

According to the embodiment of the present disclosure, the positive and negative peak values of the three-phase output voltages of the wind turbine may include the positive peak value $U_{apeak+}$ and negative peak value $U_{apeak-}$ of the a-phase output voltage, the positive peak value $U_{bpeak+}$ and negative peak value $U_{bpeak-}$ of the b-phase output voltage, and the positive peak value $U_{cpeak+}$ and negative peak value $U_{cpeak-}$ of the c-phase output voltage.

Next, in step S302, absolute values of the positive and negative peak values of the three-phase output voltages may be summed to obtain a peak sum $U_{peak\_sum}$ of the three-phase output voltages. Specifically, the absolute values of all of the positive and negative peak values $U_{apeak+}$ and $U_{apeak-}$ of the a-phase output voltage, the positive and negative peak values

$U_{bpeak+}$ and $U_{bpeak-}$ of the b-phase output voltage, and the positive and negative peak values $U_{cpeak+}$ and $U_{cpeak-}$ of the c-phase output voltage collected within the predetermined time period $T_1$ may be summed to obtain the peak sum $U_{peak\_sum}$ of the three-phase output voltages.

Subsequently, in step S303, a peak average value $U_{peak\_aver}$ of the three-phase output voltages within the predetermined time period $T_1$ is determined based on the peak sum $U_{peak\_sum}$ of the three-phase output voltages. In an embodiment, the peak average value $U_{peak\_aver}$ of the three-phase output voltages within the predetermined time period $T_1$ may be determined by using the following equation (3).

$$U_{peak\_Aver} = \frac{U_{peak\_sum}}{2n \times 3} \quad (3)$$

Finally, in step S304, the flux linkage of the wind turbine may be determined based on the peak average value $U_{peak\_aver}$ of the three-phase output voltages within the predetermined time period $T_1$. In an embodiment, the flux linkage of the wind turbine may be determined by using the following equation (4).

$$\varphi_f = \frac{U_{peak\_Aver}}{2\pi f} \quad (4)$$

Wherein, $\varphi_f$ represents the flux linkage of the wind turbine, and $f$ represents the frequency of the wind turbine.

Figure 4 illustrates a flowchart of a method for determining flux linkage of a wind turbine based on three-phase output voltages of a wind turbine according to another embodiment of the present disclosure.

In step S401, positive peak values and negative peak values of output voltages of any one of phases in the three-phase output voltages of the wind turbine within a predetermined time period $T_1$ is collected. In the embodiment, the duration of the predetermined time period $T_1$ may be determined by using the equation (2) above, which is not limited in the present disclosure as described above. The duration of the predetermined time period $T_1$ may be arbitrarily set by those skilled in the art as required.

Next, in step S402, absolute values of the positive peak values and negative peak values of the output voltages of any one of phases may be summed to obtain a peak sum of the output voltage of any one of phases. For example, the absolute values of all the positive peak value $U_{apeak+}$ and negative peak value $U_{apeak-}$ of the a-phase output voltage collected within the predetermined time period $T_1$ may be summed to obtain a peak sum $U_{apeak\_sum}$ of the a-phase output voltage. Alternatively, the absolute values of all the positive peak value and negative peak value $U_{bpeak-}$ of the b-phase output voltage collected within the predetermined time period $T_1$ may be summed to obtain a peak sum $U_{bpeak\_sum}$ of the b-phase output voltage. Or, the absolute values of all the positive peak value $U_{cpeak+}$ and negative peak value $U_{cpeak-}$ of the c-phase output voltage collected within the predetermined time period $T_1$ may be summed to obtain a peak sum $U_{cpeak\_sum}$ of the c-phase output voltage.

Subsequently, in step S403, a peak average value of the output voltages of any one of phases within the predetermined time period $T_1$ may be determined based on the peak sum of the output voltages of any one of phases (e.g., the peak sum $U_{apeak\_sum}$ of the a-phase output voltage, the peak sum $U_{bpeak\_sum}$ of the b-phase output voltage, or the peak sum $U_{cpeak\_sum}$ of the c-phase output voltage). As an example, the peak sum $U_{apeak\_sum}$ of the a-phase output voltage is provided for illustration. The peak average value $U_{apeak\_aver}$ of the a-phase output voltage within the predetermined time period $T_1$ may be determined by using the following equation (5).

$$U_{apeak\_Aver} = \frac{U_{apeak\_sum}}{2n} \quad (5)$$

Optionally, the peak average value $U_{bpeak\_aver}$ of the b-phase output voltage and the peak average value $U_{cpeak\_aver}$ of the c-phase output voltage may be similarly determined.

Finally, in step S404, the flux linkage of the wind turbine may be determined based on the peak average value of the output voltages of any one of phases (e.g., the peak average value $U_{apeak\_aver}$ of the a-phase output voltage, the peak average value $U_{bpeak\_aver}$ of the b-phase output voltage, or the peak average value $U_{cpeak\_aver}$ of the c-phase output voltage) within the predetermined time period $T_1$. In an embodiment, the flux linkage of the wind turbine may be determined by using the equation (4) above.

Returning to Figure 2, in step S204, other parameters of the wind turbine may be determined through a predetermined parameter configuration table based on at least one parameter determined in step S203.

As described above, the parameter configuration table may reflect a correspondence relationship between the pole-pair number $P_n$ and the flux linkage $\varphi_f$ of the wind turbine with the resistance $R_s$, the d-axis inductance and the q-axis inductance of the wind turbine, or a correspondence relationship between the pole-pair number $P_n$ of the wind turbine with the flux linkage $\varphi_f$, the resistance $R_s$, the d-axis inductance and the q-axis inductance of the wind turbine, or a correspondence relationship between the flux linkage $\varphi_f$ of the wind turbine with the pole-pair number $P_n$, the resistance $R_s$, the d-axis inductance and the q-axis inductance of the wind turbine. For example, in a case that the pole-pair number $P_n$ and the flux linkage $\varphi_f$ of the wind turbine are determined in step S203, then, in step S204, the resistance $R_s$, the d-axis inductance, and the q-axis inductance of the wind turbine may be determined through the parameter configuration table based on the determined pole-pair number $P_n$ and the flux linkage $\varphi_f$ of the wind turbine. In a case that the pole-pair number $P_n$ of the wind turbine is determined in step S203, then, in step S204, the flux linkage $\varphi_f$, the resistance $R_s$, the d-axis inductance, and the q-axis inductance of the wind turbine may be determined through the parameter configuration table based on the determined pole-pair number $P_n$ of the wind turbine. In a case that the flux linkage $\varphi_f$ of the wind turbine is determined in step S203, then, in step S204, the pole-pair number $P_n$, the resistance $R_s$, the d-axis inductance, and the q-axis inductance of the wind turbine may be determined through the parameter configuration table based on the determined flux linkage $\varphi_f$ of the wind turbine.

By applying the parameter identification method for the wind turbine according to the embodiment of the disclosure as described above, the generator parameters can be identified fast, eliminating the process of manually configuring the generator parameters and reducing manual labor consumption. In addition, the maintenance efficiency of the control software of the wind turbine can be improved, and the risk of reducing the operational reliability of the wind turbine due to incorrect configuration of generator parameters by human factors is avoided, without increasing the hardware cost of the wind turbine.

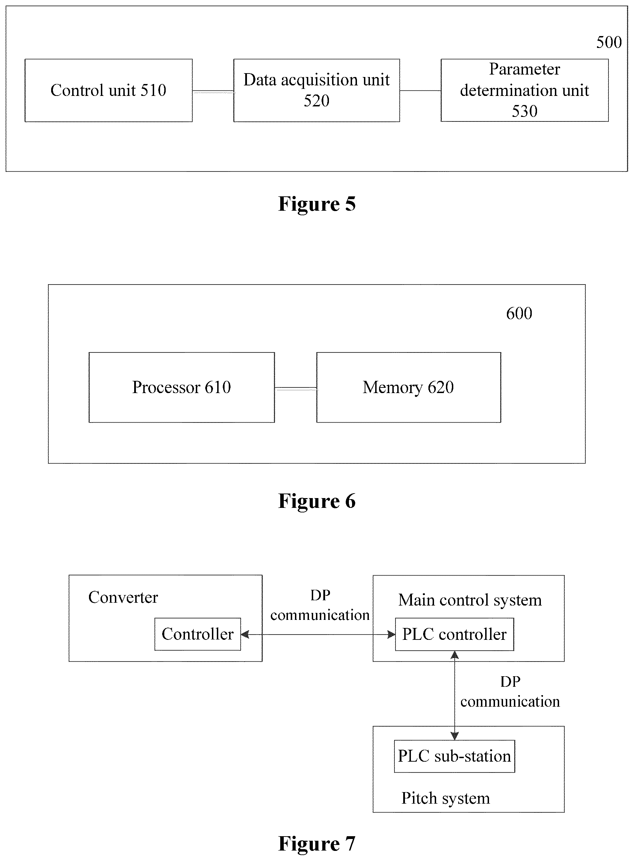

Figure 5 illustrates a block diagram of a parameter identification apparatus for a wind turbine according to an embodiment of the present disclosure. In the present disclosure, the parameter identification apparatus for the wind turbine may be implemented in a main controller of the wind turbine or in a dedicated controller of the wind turbine.

Referring to Figure 5, the parameter identification apparatus 500 for the wind turbine may include a control unit 510, a data acquisition unit 520, and a parameter determination unit 530. The control unit 510 may control the wind turbine to no-load start and operate stably. The data acquisition unit 520 may acquire operating data of the wind turbine. The parameter determination unit 530 may determine at least one parameter of the wind turbine based on the acquired operating data of the wind turbine, and determine other parameters of the wind turbine through a predetermined parameter configuration table based on the at least one determined parameter. In an embodiment, as described above, the parameter configuration table may reflect a correspondence relationship between the pole-pair number $P_n$ and flux linkage $\varphi_f$ of the wind turbine with a resistance $R_s$, a d-axis inductance, and a q-axis inductance of the wind turbine, or a correspondence relationship between the pole-pair number $P_n$ of the wind turbine with the flux linkage $\varphi_f$, the resistance $R_s$, the d-axis inductance and the q-axis inductance of the wind turbine, or a correspondence relationship between the flux linkage $\varphi_f$ of the wind turbine with the pole-pair number $P_n$, the resistance $R_s$, the d-axis inductance and the q-axis inductance of the wind turbine.

According to the embodiment of the present disclosure, before the parameter identification apparatus 500 for parameter identification of the wind turbine implements operations, a turbine-side circuit breaker of a converter of the wind turbine may be closed to connect the converter to the wind turbine.

The operating data acquired by the data acquisition unit 520 may include three-phase output voltages of the wind turbine and a rotational speed of the wind turbine. For example, the data acquisition unit 520 may collect the three-phase output voltages of the wind turbine in real-time by using various detection devices. In addition, the data acquisition unit 520 may detect the rotational speed of the wind turbine through a detection device. Alternatively, the data acquisition unit 520 may also detect the rotational speed of the wind turbine by using a physical rotational speed detection method.

The parameter determination unit 530 may determine the pole-pair number of the wind turbine and/or the flux linkage of the wind turbine based on the three-phase output voltages and the rotational speed of the wind turbine. In an embodiment, the parameter determination unit 530 may determine a frequency of the wind turbine based on the three-phase output voltages of the wind turbine, and determine the pole-pair number of the wind turbine based on the rotational speed of the wind turbine and the determined frequency of the wind turbine. More specifically, the parameter determination unit 530 may determine a voltage of the wind turbine in a two-phase rotating coordinate system based on the three-phase output voltages of the wind turbine, and input the voltage in the two-phase rotating coordinate system into a phase-locked loop to obtain the frequency of the wind turbine. For example, the parameter determination unit 530 may acquire the voltage (i.e., a d-axis voltage $U_d$ and a q-axis voltage $U_q$) in the rotating coordinate system by performing Clark-Parker Transformation on the three-phase output voltages of the wind turbine, and input the voltage in the rotating coordinate system (e.g., the d-axis voltage $U_d$ or the q-axis voltage $U_q$) into the phase-locked loop to acquire an output of the phase-locked loop as the frequency of the wind turbine. In an embodiment, the parameter determination unit 530 may determine the frequency of the wind turbine by performing zero crossing detection on an output voltage of at least one phase in the three-phase output voltages of the wind turbine within a predetermined time period. In addition, the parameter determination unit 530 may collect positive peak values and negative peak values of the three-phase output voltages of the wind turbine within the predetermined time period; sum absolute values of the positive peak values and negative peak values of the three-phase output voltages to obtain a peak sum of the three-phase output voltages; determine a peak average value of the three-phase output voltages within the predetermined time period, based on the peak sum of the three-phase output voltages; and determine the flux linkage of the wind turbine, based on the peak average value of the three-phase output voltages within the predetermined time period. Alternatively, the parameter determination unit 530 may collect positive peak values and negative peak values of output voltages of any one of phases in the three-phase output voltages of the wind turbine within a predetermined time period; sum absolute values of the positive and negative peak values of the output voltages of any one of phases to obtain a peak sum of the output voltages of any one of the phases; determine a peak average value of the output voltages of any one of phases within the predetermined time period, based on the peak sum of the output voltages of any one of phases; and determine the flux linkage of the wind turbine, based on the peak average value of the output voltages of any one of phases within the predetermined time period. In an embodiment, a ratio of the duration of the predetermined time period to the frequency of the wind turbine is greater than or equal to a preset value.

In a case that the parameter determination unit 530 determines the pole-pair number $P_n$ and the flux linkage $\varphi_f$ of the wind turbine, it may determine the resistance $R_s$, the d-axis inductance, and the q-axis inductance of the wind turbine through a parameter configuration table based on the determined pole-pair number $P_n$ and the flux linkage $\varphi_f$ of the wind turbine. In a case that the parameter determination unit 530 determines the pole-pair number $P_n$ of the wind turbine, it may determine the flux linkage $\varphi_f$, the resistance $R_s$, the d-axis inductance, and the q-axis inductance of the wind turbine through a parameter configuration table based on the determined pole-pair number $P_n$ of the wind turbine. In a case that the parameter determination unit 530 determines the flux linkage $\varphi_f$ of the wind turbine, it may determine the pole-pair number $P_n$, the resistance $R_s$, the d-axis inductance, and the q-axis inductance of the wind turbine through a parameter configuration table based on the determined flux linkage $\varphi_f$ of the wind turbine.

Figure 6 illustrates a block diagram of a controller of a wind turbine according to an embodiment of the present disclosure.

Referring to Figure 6, a controller 600 of a wind turbine according to the embodiment of the present disclosure may be, but is not limited to, a main controller of the wind turbine. The controller 600 of the wind turbine according to the embodiment of the present disclosure may include a processor 610 and a memory 620. The processor 610 may include (but is not limited to) a central processing unit (CPU), a digital signal processor (DSP), a microcomputer, a field programmable gate array (FPGA), a system on chip (SoC), a microprocessor, a specialized integrated circuit (ASIC), etc. The memory 620 stores a computer program to be executed by the processor 610. The memory 620 includes high-speed random access memory and/or non-volatile computer-readable storage medium. When the processor 610 executes the computer program stored in the memory 620, the method for parameter identification of the wind turbine as described above may be implemented.

Optionally, the controller 600 may communicate with other components in the wind turbine in a wired/wireless communication manner, and may also communicate with other apparatuses in a wind farm in a wired/wireless communication manner. In addition, the controller 600 may communicate with apparatuses outside the wind farm in a wired/wireless communication manner.

The parameter identification method for a wind turbine according to the embodiment of the present disclosure may be written as a computer program and stored on a computer-readable storage medium. When the computer program is executed by the processor, the parameter identification method for a wind turbine as described above can be implemented. Examples of computer-readable storage medium include: a read-only memory (ROM), a random access programmable read-only memory (PROM), an electrically erasable programmable read-only memory (EEPROM), a random access memory (RAM), a dynamic random access memory (DRAM), a static random access memory (SRAM), a flash memory, a non-volatile memory, a CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, a blue ray or optical memory, a hard disk drive (HDD), a solid state hard disk (SSD), a card memory (such as a multimedia card, a secure digital (SD) card, or an extreme digital (XD) card), a magnetic tape, a floppy disk, a magneto-optical data storage apparatus, an optical data storage apparatus, a hard disk, a solid-state disk, and any other apparatuses. Any other apparatuses are configured to store computer programs and any associated data, data files, and data structures in a non-temporary manner and provide the computer programs and any associated data, data files, and data structures to the processor or computer to enable the processor or computer to execute the computer programs. In one example, the computer programs and any associated data, data files, and data structures are distributed on a networked computer system, which enable the computer programs and any associated data, data files, and data structures to be stored, accessed, and executed in a distributed manner through one or more processors or computers.

Figure 7 is an embodiment of identifying generation parameters according to a solution of the present disclosure, which shows the devices of wind turbine involved. With reference to Figure 7, the workflow involved parameter configuration table is provided as follows. After a converter enters a mode of enabling parameter identification, a controller of the converter sends a control instruction to a PLC controller of a main control system of a wind turbine through DP communication. After receiving the control instruction, the PLC controller of the main control system sends a pitch action instruction and an action angle to a PLC sub-station of a pitch system through DP communication. After the pitch action is completed, the information is fed back to the main control system. After receiving pitch state feedback, the main control system feeds back a pitch action signal to the converter. After receiving the pitch action signal, the converter initiates the calculation of parameters, i.e., the pole-pair number and the flux linkage of the generator.

With the parameter identification method and apparatus for a wind turbine provided according to the embodiments of the present disclosure, generator parameters can be identified, which can eliminate the process of manually configuring generator parameters and save manual labor consumption. In addition, according to the embodiments of the present disclosure, the parameter identification method and apparatus for a wind turbine can improve the maintenance efficiency of the control software of the wind turbine, eliminate the risk of reducing the operational reliability of the wind turbine due to incorrect configuration of the generator parameters by human factors, without increasing the hardware cost of the wind turbine, which facilitates application.

Although some embodiments have been illustrated and described in the present disclosure, it should be understood by those skilled in the art that various modifications may be made to the embodiments without departing from the spirit and scope of the present disclosure as defined in the appended claims and equivalents thereof.

**Claims**

1. A parameter identification method for a wind turbine, comprising:

    controlling the wind turbine to no-load start and operate stably;
    acquiring operating data of the wind turbine;
    determining at least one parameter of the wind turbine based on the acquired operating data of the wind turbine; and
    determining other parameters of the wind turbine through a predetermined parameter configuration table, based on the at least one determined parameter.

2. The method according to claim 1, wherein the parameter identification method further comprises:
    before controlling the wind turbine to no-load start, closing a turbine-side circuit breaker of a converter of the wind turbine to connect the converter to the wind turbine.

3. The method according to claim 1, wherein the operating data comprises three-phase output voltages of the wind turbine and a rotational speed of the wind turbine.

4. The method according to claim 3, wherein the determining at least one parameter of the wind turbine based on the acquired operating data of the wind turbine comprises:
    determining a pole-pair number and/or flux linkage of the wind turbine, based on the three-phase output voltages and the rotational speed of the wind turbine.

5. The method according to claim 4, wherein the determining the pole-pair number of the wind turbine based on the three-phase output voltages of the wind turbine comprises:

    determining a frequency of the wind turbine, based on the three-phase output voltages of the wind turbine; and
    determining the pole-pair number of the wind turbine, based on the rotational speed of the wind turbine and the determined frequency of the wind turbine.

6. The method according to claim 5, wherein the determining the frequency of the wind turbine based on the three-phase output voltages of the wind turbine comprises:

    determining a voltage of the wind turbine in a two-phase rotating coordinate system, based on the three-phase output voltages of the wind turbine; and
    inputting the voltage in the two-phase rotating coordinate system into a phase-locked loop to obtain the frequency of the wind turbine.

7. The method according to claim 5, wherein the determining the frequency of the wind turbine based on the three-phase output voltages of the wind turbine comprises:
    determining the frequency of the wind turbine by performing zero-crossing detection on an output voltage of at least one phase in the three-phase output voltages of the wind turbine within a predetermined time period.

8. The method according to claim 3, wherein the rotational speed of the wind turbine is detected by a detection device, and/or the rotational speed of the wind turbine is detected by using a physical rotational speed detection method.

9. The method according to claim 4, wherein the determining the flux linkage of the wind turbine based on the three-phase output voltages of the wind turbine comprises:

    collecting positive peak values and negative peak values of the three-phase output voltages of the wind turbine within a predetermined time period; and
    summing absolute values of the positive peak values and negative peak values of the three-phase output voltages to obtain a peak sum of the three-phase output voltages;
    determining a peak average value of the three-phase output voltages within the predetermined time period, based on the peak sum of the three-phase output voltages; and
    determining the flux linkage of the wind turbine

based on the peak average value of the three-phase output voltages within the predetermined time period.

10. The method according to claim 4, wherein the determining the flux linkage of the wind turbine based on the three-phase output voltages of the wind turbine comprises:

collecting positive peak values and negative peak values of output voltages of any one of phases in the three-phase output voltages of the wind turbine within the predetermined time period;

summing absolute values of the positive peak values and negative peak values of the output voltages of any one of the phases to obtain a peak sum of the output voltages of any one of the phases;

determining a peak average value of the output voltages of any one of the phases within the predetermined time period, based on the peak sum of the output voltages of any one of the phases; and

determining the flux linkage of the wind turbine, based on the peak average value of the output voltages of any one of the phases within the predetermined time period.

11. The method according to claims 9 or 10, wherein a ratio of a duration of the predetermined time period to a frequency of the wind turbine is greater than or equal to a preset value.

12. The method according to claim 4, wherein,

the parameter configuration table reflects a correspondence relationship between a pole-pair number and flux linkage of the wind turbine with a resistance, a d-axis inductance and a q-axis inductance of the wind turbine; or

the parameter configuration table reflects a correspondence relationship between the pole-pair number of the wind turbine with flux linkage, a resistance, a d-axis inductance and a q-axis inductance of the wind turbine; or

the parameter configuration table reflects a correspondence relationship between flux linkage of the wind turbine with a pole-pair number, a resistance, a d-axis inductance and a q-axis inductance of the wind turbine.

13. A parameter identification apparatus for a wind turbine, comprising:

a processor; and
a memory, storing a computer program; wherein the computer program, when executed by the processor, implements the parameter identification method for the wind turbine of any one of claims 1 to 12.

14. A computer readable storage medium, storing a computer program; wherein the computer program, when executed by a processor, implements the parameter identification method for a wind turbine of any one of claims 1 to 12.

**Figure 1**

```
                        ┌──────────────┐
                        │    Start     │
                        └──────┬───────┘
                               │
                               ▼
   ┌───────────────────────────────────────────────────────────┐
   │  Control a wind turbine to  no-load start and operate      │
   │  stably (S201)                                             │
   └───────────────────────────┬───────────────────────────────┘
                               │
                               ▼
   ┌───────────────────────────────────────────────────────────┐
   │     Acquire operating data of the wind turbine (S202)      │
   └───────────────────────────┬───────────────────────────────┘
                               │
                               ▼
   ┌───────────────────────────────────────────────────────────┐
   │  Determine at least one parameter of the wind turbine      │
   │  based on the acquired operating data of the wind          │
   │  turbine (S203)                                            │
   └───────────────────────────┬───────────────────────────────┘
                               │
                               ▼
   ┌───────────────────────────────────────────────────────────┐
   │  Determine other parameters of the wind turbine through    │
   │  a predetermined parameter configuration table based on    │
   │  the at least one determined parameter (S204)              │
   └───────────────────────────┬───────────────────────────────┘
                               │
                               ▼
                        ┌──────────────┐
                        │     End      │
                        └──────────────┘
```

**Figure 2**

Start

Collect positive and negative peak values of the three-phase output voltages of the wind turbine within a predetermined time period (S301)

Sum absolute values of positive and negative peak values of the three-phase output voltages to obtain a peak sum of the three-phase output voltages (S302)

Determine a peak average value of the three-phase output voltages within the predetermined time period, based on the peak sum of the three-phase output voltages (S303)

Determine the flux linkage of the wind turbine, based on the peak average value of the three-phase output voltages within the predetermined time period (S304)

End

**Figure 3**

Start

Collect positive and negative peak values of output voltages of any one of phases in the three-phase output voltages of the wind turbine within a predetermined time period (S401)

Sum absolute values of the positive and negative peak values of the output voltages of any one of phases to obtain a peak sum of the output voltages of any one of the phases (S402)

Determine a peak average value of the output voltages of any one of the phases within the predetermined time period, based on the peak sum of the output voltages of any one of phases (S403)

Determine the flux linkage of the wind turbine, based on the peak average value of the output voltages of any one of the phases within the predetermined time period (S404)

End

**Figure 4**

500

| Control unit 510 | Data acquisition unit 520 | Parameter determination unit 530 |

**Figure 5**

600

| Processor 610 | Memory 620 |

**Figure 6**

Converter
Controller

DP communication

Main control system
PLC controller

DP communication

PLC sub-station

Pitch system

**Figure 7**

## INTERNATIONAL SEARCH REPORT

| International application No. |
|---|
| **PCT/CN2021/119535** |

**A. CLASSIFICATION OF SUBJECT MATTER**

H02P 21/14(2016.01)i

According to International Patent Classification (IPC) or to both national classification and IPC

**B. FIELDS SEARCHED**

Minimum documentation searched (classification system followed by classification symbols)

H02P

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT: 金风科技, 电机, 电动机, 马达, 参数, 辨识, 极对数, 磁链, 磁通, 电阻, 电感, motor, parameter, observe, identify, pole pairs, magnetic, flux, resistance, inductance

**C. DOCUMENTS CONSIDERED TO BE RELEVANT**

| Category* | Citation of document, with indication, where appropriate, of the relevant passages | Relevant to claim No. |
|---|---|---|
| PX | CN 113315432 A (XINJIANG GOLDWIND SCIENCE & TECHNOLOGY CO., LTD.) 27 August 2021 (2021-08-27) description, paragraphs [0037]-[0084], and figures 1-6 | 1-14 |
| Y | CN 107919831 A (NANJING INSTITUTE OF TECHNOLOGY) 17 April 2018 (2018-04-17) description, paragraphs [0064]-[0112], and figures 1-4 | 1-14 |
| Y | CN 106655941 A (GUANGZHOU AUTOMOBILE GROUP CO., LTD.) 10 May 2017 (2017-05-10) description, paragraphs [0064]-[0181], and figures 1 and 2 | 1-14 |
| A | CN 104283479 A (WOLONG ELECTRICAL GROUP HANGZHOU RESEARCH INSTITUTE CO., LTD. et al.) 14 January 2015 (2015-01-14) entire document | 1-14 |
| A | CN 105527593 A (SAIC MOTOR CORP. LTD.) 27 April 2016 (2016-04-27) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2021** | **28 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/119535**

| Patent document cited in search report | | | Publication date (day/month/year) | Patent family member(s) | | | Publication date (day/month/year) |
|---|---|---|---|---|---|---|---|
| CN | 113315432 | A | 27 August 2021 | None | | | |
| CN | 107919831 | A | 17 April 2018 | CN | 107919831 | B | 16 August 2019 |
| CN | 106655941 | A | 10 May 2017 | CN | 106655941 | B | 23 April 2019 |
| CN | 104283479 | A | 14 January 2015 | CN | 104283479 | B | 01 February 2017 |
| CN | 105527593 | A | 27 April 2016 | CN | 105527593 | B | 15 February 2019 |

Form PCT/ISA/210 (patent family annex) (January 2015)